# EUROPÄISCHE PATENTSCHRIFT

(11) **EP 3 470 691 B1**
(45) Veröffentlichungstag und Bekanntmachung des Hinweises auf die Patenterteilung: **29.04.2020**
(21) Anmeldenummer: 18197844.6
(22) Anmeldetag: 01.10.2018
(51) Int. Cl.: F16B 13/08

(54) **KIPPDÜBEL**
TOGGLE FASTENER
CHEVILLE BASCULANTE

(30) Priorität: 11.10.2017 DE 102017123655
(43) Veröffentlichungstag der Anmeldung: 17.04.2019
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- DE-A1-102015 116 421
- US-A- 870 820
- US-A- 4 079 655
- US-A- 4 274 324

## Beschreibung

Die Erfindung betrifft einen Kippdübel mit den Merkmalen des Oberbegriffs des Anspruchs 1.

Ein gattungsgemäßer Kippdübel ist aus der Druckschrift DE 10 2015 116 421 A1 bekannt. Der Kippdübel dient zum Befestigen eines Gegenstandes an einem dünnwandigen Bauteil, beispielsweise an einer Gipskartonplatte, wie sie im Trockenbau zur Herstellung von Wänden und zur Verkleidung von Decken Verwendung findet. Ein "dünnwandiges" Bauteil kann aber auch die Wandung eines Hochlochziegels oder die einer Sanitärkeramik sein, wobei die Aufzählung nicht abschließend ist. Im verbauten Zustand ist die Rückseite des Bauteils im Regelfall nicht zugänglich, sondern es befindet sich ein Hohlraum hinter dem Bauteil. Ist das Bauteil beispielsweise eine Gipskartonplatte und soll ein Gegenstand daran befestigt werden, wird die Gipskartonplatte zunächst durchbohrt und durch das Bohrloch wird ein Balken des Kippdübels in den Hohlraum hinter der Platte eingebracht. Der Balken ist bei dem aus der Druckschrift DE 10 2015 116 421 A1 bekannten Kippdübel ein entlang einer Balkenlängsachse lang gestrecktes, im Wesentlichen zylindrisches Element aus Kunststoff, das mittig eine quer verlaufende Öffnung mit einem Innengewinde zur Aufnahme einer Schraube aufweist. Mit dem Balken ist einstückig ein Band verbunden, das elastisch und/oder plastisch biegbar ist. Das Band ist dadurch schwenkbar mit dem Balken verbunden. Durch die schwenkbare Verbindung kann der Balken gegenüber dem Band gekippt werden, so dass er durch ein Bohrloch im dünnwandigen Bauteil geführt und im Hohlraum hinter dem Bauteil wieder gekippt und zur Anlage an die Rückseite des Bauteils gebracht werden kann. In der Endstellung kann ein Gegenstand auf das Bauteil aufgesetzt und mit einer Schraube am Balken des Kippdübels und damit am Bauteil befestigt werden.

Um auch Schrauben am Balken befestigen zu können, deren Außendurchmesser kleiner als der Innendurchmesser der Öffnung ist, schlägt die Druckschrift DE 10 2015 116 421 A1 vor, dass am Balken mindestens ein Widerlagerelement angeordnet ist, das einen Abstand zur Öffnungslängsachse aufweist, der geringer als der halbe Innendurchmesser der Öffnung ist.

Allerdings hat sich gezeigt, dass bei einer steifen Ausbildung des Balkens und des Widerlagerelements es bei manchen Schrauben passieren kann, dass sich das zur Schraube gewandte Ende des Widerlagerelements nicht federzungenartig an die Geometrie der Schraube anpasst, sondern ähnlich einem Gesperre am Kern des Schraubengewindes anliegt und hohe Reibkräfte erzeugt. Dies kann auch als ein Verklemmen des Widerlagerelements am Kern der Schraube beschrieben werden. Durch das Verklemmen kann es zu einem Mitdrehen des Balkens mit der Schraube kommen, wodurch die Schraube nicht weiter in die Öffnung eingeschraubt werden kann und der Kippdübel somit nicht seinen Zweck erfüllen kann.

Aufgabe der Erfindung ist daher, den bekannten Kippdübel noch flexibler bezüglich der verwendeten Schrauben zu machen und den Balken und das Widerlagerelement gleichzeitig steif ausführen zu können.

Diese Aufgabe wird erfindungsgemäß durch die Merkmale des Anspruchs 1 gelöst. Der erfindungsgemäße Kippdübel zur Befestigung eines Gegenstandes an einem dünnwandigen Bauteil, beispielsweise an einer Gipskartonplatte, weist einen Balken zum Hintergreifen des Bauteils und ein Band auf, das mit dem Balken verbunden ist. Das Band dient zum Halten und zur Positionierung des Balkens bei der Montage, also bei der Erstellung einer Befestigungsanordnung bestehend aus dem Kippdübel, einem Gegenstand und einem dünnwandigen Bauteil. Das Band ist insbesondere lang gestreckt, insbesondere aus Kunststoff hergestellt und kann eine Zahnleiste aufweisen. Das Band ist insbesondere in sich biegesteif, aber beweglich am Balken befestigt. Insbesondere kann der Balken zum Einführen in ein Bohrloch gegenüber dem Band gekippt werden. Am Band kann außerdem eine Hülse angeordnet sein, die entlang des Bands zum Balken hin bewegt und zur Fixierung des Balkens in das Bohrloch eingeführt und gegen das Bauteil verspannt werden kann. Dazu kann die Hülse Rastelemente aufweisen, die mit einer Zahnleiste des Bandes in Wirkverbindung steht. Eine solche Hülse ist jedoch nicht Gegenstand der Erfindung.

Der Balken ist insbesondere entlang einer Balkenlängsachse lang gestreckt, das heißt, er kann durch einen Körper, insbesondere durch einen Quader umschrieben werden, der in einer Dimension, der Länge in Richtung der Balkenlängsachse, um ein Mehrfaches größer ist, als in den anderen beiden Dimensionen. Die beiden anderen Dimensionen sind die Höhe und die Breite, die orthogonal zueinander und orthogonal zur Balkenlängsachse verlaufen. Der Balken weist eine Öffnung zur Aufnahme einer Schraube auf, die insbesondere als Durchgangsöffnung ausgestaltet ist. Die Öffnung erstreckt sich entlang einer Öffnungslängsachse quer zur Balkenlängsachse, insbesondere im Wesentlichen orthogonal zur Balkenlängsachse. Befindet sich der Balken des Kippdübels im eingebauten Zustand in einer Endstellung in einem Hohlraum hinter dem Bauteil, so ist die Öffnungslängsachse derart in Richtung der Höhe des Balkens orientiert, dass die Schraube durch das Bauteil, insbesondere durch ein Bohrloch im Bauteil hindurch in die Öffnung eingeführt werden kann. Die Schraube, beispielsweise eine Holzschraube oder eine Schraube mit metrischem Gewinde, kann in der Öffnung befestigt werden. Insbesondere weist die Öffnung hierfür ein Innengewinde auf.

Um unterschiedliche Schrauben und insbesondere metrische Schrauben aufnehmen zu können, ist am Balken mindestens ein Widerlagerelement aus Metall zum Eingriff in das Gewinde der Schraube angeordnet. Insbesondere weist der Balken einen Grundkörper aus Kunststoff auf, wodurch zusätzliche Funktionen, wie beispielsweise eine Spreizfunktion in Vollbaustoffen (vgl. die Druckschrift DE 10 2015 113 332 A1), einfacher als in Metall umsetzbar sind. Das Widerlagerelement aus Metall kann demgegenüber, vor allem im Fall einer geringen Anlagefläche im Gewinde einer metrischen Schraube, hohe Kräfte übertragen. Das Widerlagerelement ist insbesondere flächig und insbesondere aus einem Blech hergestellt. Insbesondere ist das Widerlagerelement ein Stanz-Biegeteil. Um Schrauben mit kleinem Gewindedurchmesser greifen zu können, ist das Widerlager so angeordnet, dass es die Öffnung verengt. Mit "verengen" ist gemeint, dass eine lichte Weite der Öffnung, gemessen quer zur Öffnungslängsachse, zumindest an einer anderen Stelle der Öffnung größer ist als im Bereich des Widerlagerelements. Das Widerlagerelement kann bezüglich der Längserstreckung der Öffnung innerhalb der Öffnung, am Ende oder auch in dessen gedachter Verlängerung auf der dem Band abgewandten Seite der Öffnung liegen. Mit der "dem Band zugewandten Seite" ist diejenige Seite gemeint, von der sich das Band vom Balken weg erstreckt, wenn es senkrecht zum Balken steht, also insbesondere in dem verbauten Zustand des Kippdübels. Entscheidend ist also nicht die Stelle, an der das Band am Balken angebunden ist, sondern in welche Richtung sich das Band erstreckt. Vorzugsweise ist das Band allerdings auch auf der Seite des Balkens an diesen angebunden, auf der sich das Band vom Balken weg erstreckt. Diese Seite kann auch als "Tragseite" bezeichnet werden, da im eingebauten Zustand typischerweise diese Seite des Balkens zur Anlage am Bauteil kommt. Die "dem Band abgewandte Seite" ist die Seite des Balkens, die der dem Band zugewandten Seite gegenüberliegt.

Der erfindungsgemäße Kippdübel ist gekennzeichnet durch einen Kunststoffkörper, der auf der dem Band zugewandten Seite des Widerlagerelements angeordnet ist, und der, insbesondere über einen Steg oder ein Filmscharnier, beweglich mit dem Balken verbunden ist und die Öffnung verengt. Insbesondere ist der Kunststoffkörper einstückig mit einem Grundkörper des Balkens. Auch hier ist mit "verengen" gemeint, dass eine lichte Weite der Öffnung, gemessen quer zur Öffnungslängsachse, zumindest an einer anderen Stelle der Öffnung größer ist als im Bereich des Kunststoffkörpers. Vorzugsweise verengt der Kunststoffkörper die Öffnung mehr als das Widerlagerelement. Denkbar ist jedoch auch der umgekehrte Fall. Der Kunststoffkörper ist insbesondere derart angeordnet, dass er vor dem Einführen einer Schraube in die Öffnung entweder bereits an dem Widerlagerelement anliegt, oder so wenig Abstand zum Widerlagerelement ist, dass er spätestens dann am Widerlagerelement anliegt, wenn die Schraube Halt am Widerlagerelement findet. Mit "beweglich" ist eine elastische oder elastisch-plastische Verformung des Stegs oder des Filmscharniers derart gemeint, dass sich der Kunststoffkörper beim Einführen einer Schraube in Richtung von oder mit dem Widerlagerelement bewegt. Durch den Kunststoffkörper wird bewirkt, dass die Schraube beim Einschrauben das Widerlagerelement über den Kunststoffkörper schräg wegdrücken kann. "Schräg" meint in einer Richtung, die zwischen der Öffnungslängsachse und der Balkenlängsachse liegt, insbesondere etwa in einem 45-Grad-Winkel zur Öffnungslängsachse. Die Schraube kommt insbesondere zuerst mit dem Kunststoffkörper in Kontakt und greift auch mit ihrem Gewinde in den Kunststoffkörper ein. Dies verbreitert die Anlage der Schraube beziehungsweise verhindert eine punktuelle Anlage des Widerlagerelements am Kern der Schraube, wodurch ein Verklemmen des Widerlagerelements am Kern der Schraube verhindert wird. Beim weiteren Einschrauben der Schraube wird das Kunststoffelement insbesondere so radial von der Schraube nach außen gedrängt, dass das Widerlagerelement in direkten Kontakt mit dem Gewinde der Schraube kommt und dieses hierdurch einen sicheren Halt erhält.

Vorzugsweise sind das Widerlagerelement und der Kunststoffkörper auf der dem Band abgewandten Seite des Balkens angeordnet. Dabei ist beim Widerlagerelement gemeint, dass insbesondere dessen der Öffnung zugewandtes Ende auf der dem Band abgewandten Seite des Balkens angeordnet ist. Andere Teile, und insbesondere ein gegenüberliegendes Ende, des Widerlagerelements können auch bis zu der dem Band zugewandten Seite des Balkens reichen. Durch eine derartige Anordnung des Widerlagerelements können im Einbauzustand, also in einer Befestigungsanordnung, Zugkräfte von der Schraube über das Widerlagerelement schräg zur Tragseite des Balkens abgeleitet werden. Die Kräfte werden damit gut über die Anlagefläche des Balkens zum dünnwandigen Bauteil verteilt, was sich günstig auf die maximal möglichen Lasten auswirkt. Das Kunststoffelement ist dementsprechend auch auf der dem Band abgewandten Seite des Balkens angeordnet, da es, wie oben beschrieben, mit diesem beim Einschrauben einer Schraube in Anlage ist.

Um ein gerades Einschrauben einer Schraube und eine gute Verteilung der auftretenden Kräfte zu begünstigen, sind vorzugsweise zwei Widerlagerelemente und zwei Kunststoffkörper am Balken angeordnet und zwar insbesondere symmetrisch zu einer Ebene oder Achse. Insbesondere sind die Widerlagerelemente und die Kunststoffkörper im Wesentlichen symmetrisch zur Öffnungslängsachse.

In einer bevorzugten Ausführungsform weist der Kunststoffkörper zwei Flächen auf, nämlich eine erste, dem Widerlagerelement zugewandte Fläche und eine zweite, dem Widerlagerelement abgewandte Fläche. Die zweite Fläche schließt einen kleineren Winkel mit der Öffnungslängsachse ein als die erste Fläche. Die erste Fläche liegt unmittelbar am Widerlagerelement an, spätestens wenn eine Schraube eingeschraubt wird. Die Schraube kommt dagegen an der zweiten Fläche zur Anlage. Durch den kleineren Winkel kann die Schraube sich gut am Kunststoffkörper entlang bewegen und insbesondere auch eine Gegenkontur für Gewinde einschneiden. Der Kunststoffkörper kann auch als eine Art "Keil" aufgefasst werden, der zwischen Schraube und Widerlagerelement sitzt und ein Auseinanderbiegen des Widerlagerelements schräg zur Seite bewirkt.

Vorzugsweise weist der Kippdübel eine Schraube derart auf, dass das Gewinde der Schraube beim Einschrauben in die Öffnung zunächst in den Kunststoffkörper einschneidet und dann mit dem Widerlagerelement in Eingriff kommt. Durch das Einschneiden kommt es zu einem leichten Eintreiben, da die Schraube nicht vom Kopf her geschoben werden muss, sondern im Kippdübel Halt findet. Durch den Eingriff mit dem Widerlagerelement aus Metall findet dieses einen festen, steifen Halt.

Die Erfindung wird nachfolgend anhand eines Ausführungsbeispiels erläutert. Es zeigen:
- Figur 1: den erfindungsgemäßen Kippdübel ohne Schraube in einer perspektivischen Darstellung;
- Figur 2: eine Schnittdarstellung des Balkens desselben Kippdübels beim Einführen einer Schraube;
- Figur 3: eine Detailansicht aus Figur 2;
- Figur 4: eine perspektivische Detailansicht eines Grundkörpers mit Kunststoffkörpern desselben Kippdübels; und
- Figur 5: eine Detail-Draufsicht desselben Grundkörpers mit den Kunststoffkörpern.

Der in den Figuren dargestellte, erfindungsgemäße Kippdübel 1 zur Befestigung eines Gegenstandes (nicht dargestellt) an einem dünnwandigen Bauteil, beispielsweise einer Gipskartonplatte (nicht dargestellt), weist einen im Wesentlichen zylindrischen Balken 2, ein mit dem Balken 2 einstückig verbundenes Band 3 und eine Hülse 4 aus Kunststoff auf, die am Band 3 angeordnet ist.

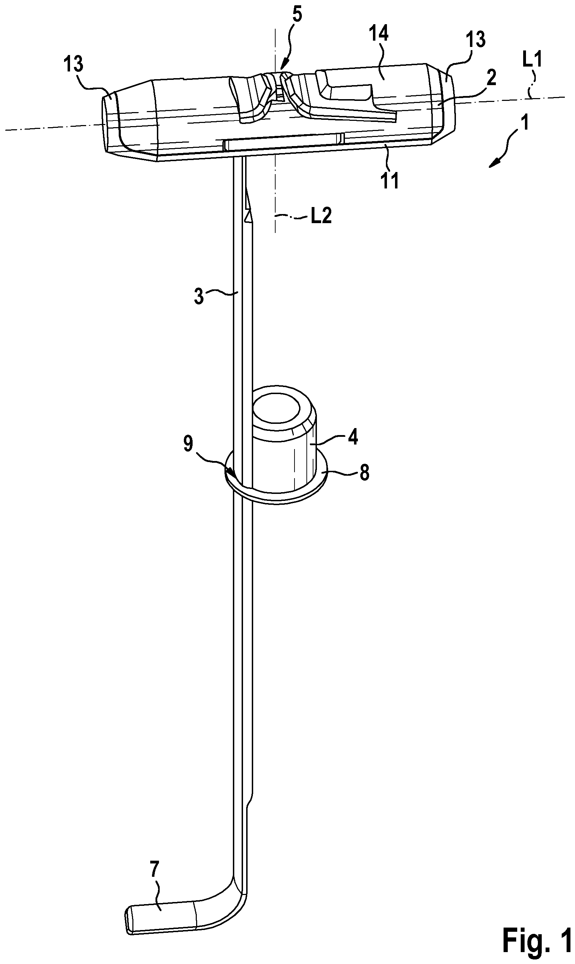

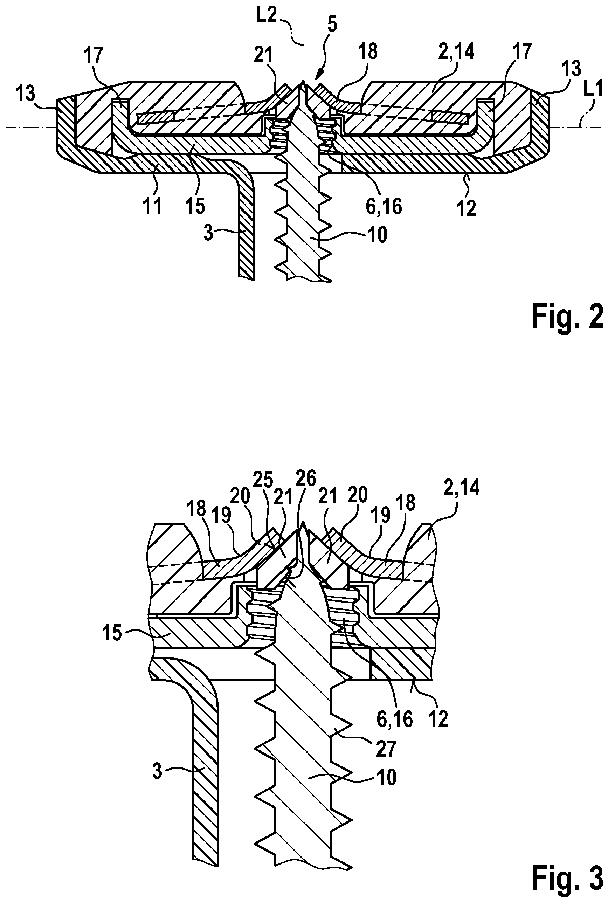

Der Balken 2 dient zum Hintergreifen des dünnwandigen Bauteils. Er erstreckt sich entlang einer Balkenlängsachse L1 und weist mittig eine Öffnung 5 mit einem Innengewinde 6 auf (siehe Figuren 2 und 3), worauf im Folgenden noch näher eingegangen wird. Die Öffnung 5 erstreckt sich entlang einer Öffnungslängsachse L2, die senkrecht zur Balkenlängsachse L1 verläuft. Anders ausgedrückt durchsetzt die Öffnung 5 den Balken 2 quer. Das Band 3 ist neben der Öffnung 5 an den Balken 2 angebunden und erstreckt sich im entspannten Zustand (nicht dargestellt) parallel zur Öffnungslängsachse L2, also senkrecht zur Balkenlängsachse L1. Das Band 3 ist elastisch verformbar, wodurch der Balken 2 schwenkbar gegenüber dem Band 3 ist. Da das Band 3 sich bis zum Balken 2 erstreckt, ist genau genommen der Balken 2 nicht gegenüber dem Band 3 als Ganzem, sondern nur gegenüber dessen Haupterstreckung schwenkbar. Das Band 3 weist auf einer der Öffnungslängsachse L2 zugewandten Seite Zahnelemente auf (in Figur 1 verdeckt), die entlang der Längserstreckung des Bands 3 hintereinander angeordnet sind. Am dem Balken 2 abgewandten Ende weist das Band 3 ein Griffelement 7 auf. Die Hülse 4 weist einen zylindrischen Grundkörper mit einem umlaufend abstehenden Kragen 8 auf. Der Kragen 8 wird von einer Durchführöffnung 9 für das Band 3 durchdrungen. Vor der Durchführöffnung 9 steht eine Federlasche (nicht dargestellt) ab. Durch die Durchführöffnung 9 wird das Band 3 an der Federlasche vorbei geführt, so dass die Federlasche in die Zahnelemente eingreift. Die Zahnelemente und die Federlasche sind so ausgebildet, dass die Hülse 4 gegenüber dem Band 3 nach vorne, jedoch nicht wieder nach hinten geschoben werden kann. Sollte zur Korrektur der Montage ein Verschieben nach hinten notwendig sein, können die Zahnelemente und die Federlasche durch Verkippen der Hülse 4 außer Eingriff gebracht werden (nicht dargestellt), worauf es bezüglich der Erfindung jedoch nicht ankommt.

Zur Herstellung einer Befestigungsanordnung mit dem Kippdübel 1 wird zunächst ein Bohrloch in dem dünnwandigen Bauteil erstellt. Der Kippdübel 1 wird dann mit dem Balken 2 voran in das Bohrloch gesteckt (nicht dargestellt). Dazu wird der Balken 2 gegenüber dem Band 3 verschwenkt. Sobald der Balken 2 das Bohrloch vollständig passiert hat, schwenkt er aufgrund der Elastizität des Bands 3 in seine Ausgangslage zurück, steht also wieder senkrecht zum Band 3. Mit dem Band 3 wird der Balken 2 gegen die nicht zugängliche Hinterseite des dünnwandigen Bauteils gezogen und die Hülse 4 entlang des Bands 3 nach vorne bis in das Bohrloch geschoben, bis der Kragen 8 auf einer Vorderseite des dünnwandigen Bauteils anliegt (nicht dargestellt). Das Band 3 dient bei diesem Vorgang zum Halten und zur Positionierung des Balkens 2. Anschließend kann das überstehende Ende des Bands 3 abgeschnitten oder abgebrochen und der zu befestigende Gegenstand auf den Kragen 8 aufgesetzt werden (nicht dargestellt). Mit einer Schraube 10, auf die im Zusammenhang mit der Beschreibung der Figuren 2 und 3 noch näher eingegangen wird, erfolgt die eigentliche Befestigung des Gegenstands. Die Schraube 10 wird durch ein Aufnahmeloch oder dergleichen des Gegenstands, sowie durch die Hülse 4 hindurch bis zum Balken 2 geführt und in die Öffnung 5 im Balken 2 eingeschraubt.

Der Längsschnitt der Figur 2 durch den Balken 2 zeigt, wie dieser aufgebaut ist. Der Balken 2 weist auf der dem Band 3 zugewandten Seite, die im Folgenden als Tragseite bezeichnet wird, ein flächiges Tragelement 11 aus Kunststoff auf, das eine Anlagefläche 12 zur Anlage an der Hinterseite des dünnwandigen Bauteils bildet. Je eine senkrecht zur Anlagefläche 12 stehende Scheibe 13 umfasst einen Grundkörper 14 aus Kunststoff, so dass sich der Grundkörper 14 zwischen den Scheiben 13 auf einer dem Band 3 abgewandten Seite des Tragelements 11 erstreckt. Die Scheiben 13 bilden die beiden Enden des Balkens 2. Das Tragelement 11 geht einstückig in das Band 3 über.

Zwischen dem Tragelement 11 und dem Grundkörper 14 erstreckt sich parallel zur Balkenlängsachse L1 ein Metallkern 15. Der Metallkern 15 ist aus einem Stahlblech geformt, weist mittig einen Gewindedurchzug 16 mit dem Innengewinde 6 und an beiden Enden eine kurze Abkantung 17 auf. Der Metallkern 15 ist etwas kürzer als der Grundkörper 14 und im Wesentlichen symmetrisch zur Öffnungslängsachse L2 angeordnet und ausgebildet.

Auf einer dem Band 3 abgewandten Seite des Metallkerns 15 sind symmetrisch zur Öffnungslängsachse L2 zwei Widerlagerelemente 18 aus Metall angeordnet. Die Widerlagerelemente 18 erstrecken sich in etwa von den Abkantungen 17 aus zunächst in einem flachen Winkel zur Balkenlängsachse L1 in Richtung der Öffnung 5. Etwa im Bereich des Gewindedurchzugs 16 bilden die Widerlagerelemente 18 eine leichte Biegekante 19 und verlaufen in einem größeren Winkel als zuvor zur Balkenlängsachse L1. Die Widerlagerelemente 18 bilden in diesem Bereich Zungen 20, die sich zur Öffnungslängsachse L2 hin verjüngen (siehe Figur 1). Die Widerlagerelemente 18 verengen die Öffnung 5. Eine lichte Weite der Öffnung 5 in Richtung der Öffnungslängsachse L2 gesehen ist im Bereich der Widerlagerelemente 18 geringer als im Bereich des Innengewindes 6.

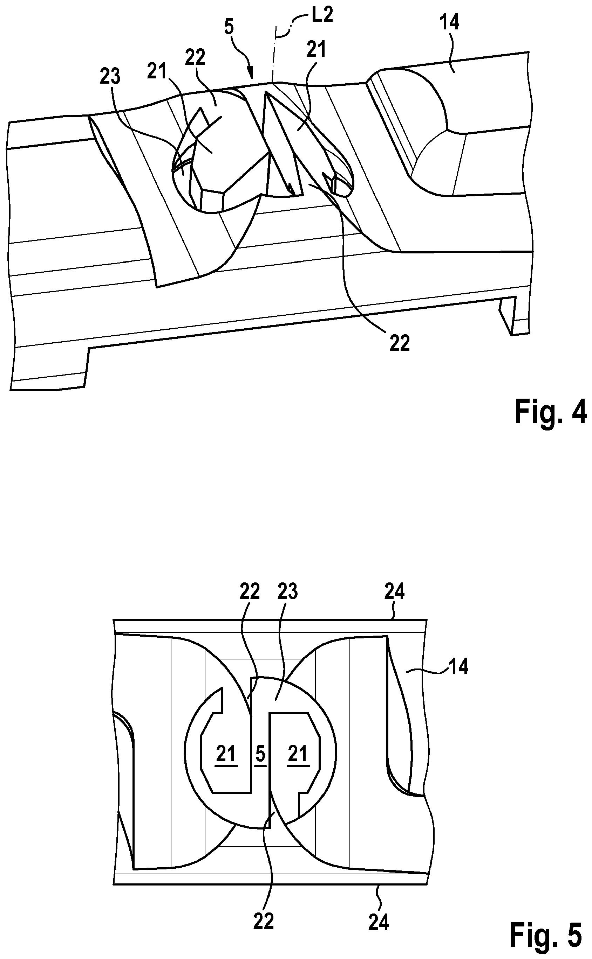

Auf der dem Band 3 zugwandten Seite der Zungen 20 ist jeweils ein Kunststoffkörper 21 angeordnet. Die Kunststoffkörper 21 werden hier nicht als Teil des Balkens 2 betrachtet, sind jedoch einstückig über Stege 22 mit dem Grundkörper 14 verbunden. Wie in den Figuren 4 und 5 zu sehen ist, ragen die Stege 22 von einer kreisförmigen Ausnehmung 23, die einen Teil der Öffnung 5 bildet, tangential in die Ausnehmung 23. Die Stege 22 erstrecken sich dabei jeweils senkrecht von einer der Längsseiten 24 aus. Als die "Längsseiten 24" werden hier die Seiten längs der Balkenlängsachse L1 bezeichnet, die weder die Anlagefläche 12 bilden, noch von dieser abgewandt sind. Die Kunststoffkörper 21 sind in der in Figur 5 dargestellten Draufsicht in etwa halbkreisförmig und in dem in den Figuren 2 und 3 dargestellten Querschnitt in etwa keilförmig. Dadurch weisen die Kunststoffkörper 21 jeweils eine erste, dem Widerlagerelement 18 zugewandte Fläche 25 und eine zweite, dem Widerlagerelement 18 abgewandte Fläche 26 auf. Die zweite Fläche 26 liegt vor dem Einbringen der Schraube 10 an der jeweiligen Zunge 20 an und schließt einen kleineren Winkel mit der Öffnungslängsachse L2 ein als die erste Fläche 25. Die Öffnung 5 läuft daher im Bereich der Kunststoffkörper 21 spitzer zu, als dies nur aufgrund der Zungen 20 ohne die Kunststoffkörper 21 der Fall wäre. Die Kunststoffkörper 21 sind so innerhalb der Ausnehmung 23 angeordnet, dass eine lichte Weite in diesem Bereich der Öffnung 5 noch geringer ist als im Bereich der Widerlagerelemente 18. Die Kunststoffkörper 21 verengen also die Öffnung 5 noch mehr als die Widerlagerelemente 18. Durch die Stege 22 sind die Kunststoffkörper 21 beweglich mit dem Balken 2 verbunden, können also in eine Richtung, die dem Band entgegengesetzt ist, ausweichen.

Wird die Schraube 10 des Kippdübels 1 drehend in die Öffnung 5 eingeführt, wie dies in den Figuren 2 und 3 dargestellt ist, so kann sich die Schraube 10 mit ihrem Gewinde 27 sehr leicht im Bereich der zweiten Flächen 26 ein Gegengewinde einschneiden. Beim weiteren Einschrauben werden die Kunststoffkörper 21 von der Schraube 10 in eine Richtung schräg zur Öffnungslängsachse L2 verdrängt. Mit ihren ersten Flächen 25 drücken die Kunststoffkörper 21 die Zungen 20 der Widerlagerelemente 18 ebenfalls in eine Richtung schräg zur Öffnungslängsachse L2. Durch weiteres Einschrauben rutschen die Kunststoffkörper 21 unter die Zungen 20 und das Gewinde 27 kommt in direkten Eingriff mit den Zungen 20 der Widerlagerelemente 18. Bei einer Zugkraft an der Schraube 10 entgegen der Einschraubrichtung überträgt das Gewinde 27 diese Zugkraft auf die Widerlagerelemente 21, die die Kraft entlang ihrer Erstreckung weiterleiten und über den Metallkern 15 auf die Länge des Balkens 2 verteilen.

### Bezuqszeichenliste

### Kippdübel

- 1: Kippdübel
- 2: Balken
- 3: Band
- 4: Hülse
- 5: Öffnung
- 6: Innengewinde
- 7: Griffelement
- 8: Kragen der Hülse 4
- 9: Durchführöffnung der Hülse 4 für das Band 3
- 10: Schraube
- 11: Tragelement
- 12: Anlagefläche
- 13: Scheibe
- 14: Grundkörper
- 15: Metallkern
- 16: Gewindedurchzug
- 17: Abkantung
- 18: Widerlagerelement
- 19: Biegekante
- 20: Zunge
- 21: Kunststoffkörper
- 22: Steg
- 23: Ausnehmung
- 24: Längsseite des Balkens 2
- 25: erste, dem Widerlagerelement 18 zugewandte Fläche des Kunststoffkörpers 21
- 26: zweite, dem Widerlagerelement 18 abgewandte Fläche des Kunststoffkörpers 21
- 27: Gewinde der Schraube 10
- L1: Balkenlängsachse
- L2: Öffnungslängsachse

## Patentansprüche

1. Kippdübel (1) zur Befestigung eines Gegenstandes an einem dünnwandigen Bauteil,
der einen Balken (2) und ein Band (3) aufweist, das mit dem Balken (2) verbunden ist und zum Halten des Balkens (2) bei der Montage dient, wobei sich der Balken (2) entlang einer Balkenlängsachse (L1) erstreckt, und
wobei der Balken (2) eine Öffnung (5) zur Aufnahme einer Schraube (10) aufweist, wobei sich die Öffnung (5) entlang einer Öffnungslängsachse (L2) quer zur Balkenlängsachse (L1) erstreckt,
wobei am Balken (2) mindestens ein Widerlagerelement (18) aus Metall zum Eingriff in das Gewinde der Schraube (10) angeordnet ist, das die Öffnung (5) verengt,
**dadurch gekennzeichnet,**
**dass** auf der dem Band (3) zugewandten Seite des Widerlagerelements (18) ein Kunststoffkörper (21) angeordnet ist, der, insbesondere über einen Steg (22) oder ein Filmscharnier, beweglich mit dem Balken (2) verbunden ist und die Öffnung (5) verengt.

2. Kippdübel nach Anspruch 1, **dadurch gekennzeichnet, dass** das Widerlagerelement (18) und der Kunststoffkörper (21) auf einer dem Band (3) abgewandten Seite des Balkens (2) angeordnet sind.

3. Kippdübel nach Anspruch 1 oder 2, **dadurch gekennzeichnet, dass** der Kippdübel (1) mindestens zwei Widerlagerelemente (18) und zwei Kunststoffkörper (21) aufweist, die insbesondere symmetrisch zu einer Ebene oder Achse angeordnet sind.

4. Kippdübel nach einem der vorstehenden Ansprüche, **dadurch gekennzeichnet, dass** der Kunststoffkörper (21) eine erste, dem Widerlagerelement (18) zugewandte Fläche (25) und eine zweite, dem Widerlagerelement (18) abgewandte Fläche (26) aufweist, und dass die zweite Fläche (26) einen kleineren Winkel mit der Öffnungslängsachse (L2) einschließt als die erste Fläche (25).

5. Kippdübel nach einem der vorstehenden Ansprüche, **dadurch gekennzeichnet, dass** der Kunststoffkörper (21) die Öffnung (5) mehr verengt als das Widerlagerelement (18).

6. Kippdübel nach einem der vorstehenden Ansprüche, **dadurch gekennzeichnet, dass** der Kippdübel (1) eine Schraube (10) derart aufweist, dass das Gewinde (27) der Schraube (10) beim Einschrauben in die Öffnung (5) zunächst in den Kunststoffkörper (21) einschneidet und dann mit dem Widerlagerelement (18) in Eingriff kommt.

## Claims

1. Toggle fixing (1) for fixing an article to a thin-walled component,
having a crosspiece (2) and a strip (3) which is joined to the crosspiece (2) and serves for holding the crosspiece (2) during mounting, wherein the crosspiece (2) extends along a crosspiece longitudinal axis (L1), and
wherein the crosspiece (2) has an opening (5) for receiving a screw (10), the opening (5) extending along an opening longitudinal axis (L2) transversely with respect to the crosspiece longitudinal axis (L1),
wherein on the crosspiece (2) there is arranged at least one counterbearing element (18) made of metal for engagement in the thread of the screw (10), which element narrows the opening (5),
**characterised in that**
on the side of the counterbearing element (18) facing towards the strip (3) there is arranged a plastics body (21) which is movably joined to the crosspiece (2), especially via a rib (22) or a film hinge, and narrows the opening (5).

2. Toggle fixing according to claim 1, **characterised in that** the counterbearing element (18) and the plastics body (21) are arranged on a side of the crosspiece (2) remote from the strip (3).

3. Toggle fixing according to claim 1 or 2, **characterised in that** the toggle fixing (1) has at least two counterbearing elements (18) and two plastics bodies (21) which are especially arranged symmetrically with respect to a plane or axis.

4. Toggle fixing according to any one of the preceding claims, **characterised in that** the plastics body (21) has a first surface (25), which faces towards the counterbearing element (18), and a second surface (26), which faces away from the counterbearing element (18), and the second surface (26) encloses a smaller angle with the opening longitudinal axis (L2) than does the first surface (25).

5. Toggle fixing according to any one of the preceding claims, **characterised in that** the plastics body (21) narrows the opening (5) to a greater extent than does the counterbearing element (18).

6. Toggle fixing according to any one of the preceding claims, **characterised in that** the toggle fixing (1) has a screw (10) such that, on being screwed into the opening (5), the thread (27) of the screw (10) first cuts into the plastics body (21) and then enters into engagement with the counterbearing element (18).

## Revendications

1. Cheville basculante (1) dévolue à la fixation d'un objet à une partie structurelle à paroi mince,
comprenant une barrette (2) et une bande (3) reliée à ladite barrette (2) et servant à la retenue de ladite barrette (2), au stade du montage, sachant que ladite barrette (2) s'étend le long d'un axe longitudinal (L1) et
sachant que ladite barrette (2) comporte un orifice (5) pour recevoir une vis (10), lequel orifice (5) s'étend le long d'un axe longitudinal (L2), transversalement par rapport à l'axe longitudinal (L1) de ladite barrette,
sachant qu'au moins un élément métallique de contre-butée (18), situé sur ladite barrette (2) et réalisé pour pénétrer dans le filetage de ladite vis (10), provoque un rétrécissement dudit orifice (5),
**caractérisée par le fait**
**qu'**un corps (21) en matière plastique, disposé sur le côté de l'élément de contre-butée (18) qui est tourné vers la bande (3), est relié à la barrette (2) avec mobilité, notamment par l'intermédiaire d'une membrure (22) ou d'une charnière pelliculaire, et provoque un rétrécissement de l'orifice (5).

2. Cheville basculante selon la revendication 1, **caractérisée par le fait que** l'élément de contre-butée (18) et le corps (21) en matière plastique se trouvent sur un côté de la barrette (2) qui pointe à l'opposé de la bande (3).

3. Cheville basculante selon la revendication 1 ou 2, **caractérisée par le fait que** ladite cheville basculante (1) compte au moins deux éléments de contre-butée (18) et deux corps (21) en matière plastique agencés, en particulier, symétriquement par rapport à un plan ou à un axe.

4. Cheville basculante selon l'une des revendications précédentes, **caractérisée par le fait que** le corps (21) en matière plastique comprend une première surface (25), tournée vers l'élément de contre-butée (18), et une seconde surface (26) pointant à l'opposé dudit élément de contre-butée (18) ; et **par le fait que** ladite seconde surface (26) décrit, avec l'axe longitudinal (L2) de l'orifice, un plus petit angle que ladite première surface (25).

5. Cheville basculante selon l'une des revendications précédentes, **caractérisée par le fait que** le corps (21) en matière plastique provoque un plus fort rétrécissement de l'orifice (5) que l'élément de contre-butée (18).

6. Cheville basculante selon l'une des revendications précédentes, **caractérisée par le fait que** ladite cheville basculante (1) est pourvue d'une vis (10) de façon telle que le filetage (27) de ladite vis (10) morde tout d'abord dans le corps (21) en matière plastique, au cours du vissage dans l'orifice (5), puis vienne en prise avec l'élément de contre-butée (18).
